Europäisches Patentamt

European Patent Office

Office européen des brevets

(11) Veröffentlichungsnummer: **0 287 790**
**A2**

(12) # EUROPÄISCHE PATENTANMELDUNG

(21) Anmeldenummer: 88103429.2

(22) Anmeldetag: 05.03.88

(51) Int. Cl.4: **B21B 45/00 , C21D 9/46**

(30) Priorität: 23.04.87 DE 3713565

(43) Veröffentlichungstag der Anmeldung:
26.10.88 Patentblatt 88/43

(34) Benannte Vertragsstaaten:
**AT BE DE FR GB IT LU**

(71) Anmelder: **Hoesch Stahl Aktiengesellschaft**
**Rheinische Strasse 173**
**D-4600 Dortmund 1(DE)**

(72) Erfinder: **Fabian, Wolfgang, Dipl.-Ing.**
**Lütgenholthauser Strasse 90**
**D-4600 Dortmund 50(DE)**
Erfinder: **Kopineck, Hermann-Josef,Prof.Dr.**
**Wildbannweg 36**
**D-4600 Dortmund 50(DE)**
Erfinder: **Tamler, Horst, Dr.**
**Markerbenhöhe 10**
**D-5810 Witten(DE)**
Erfinder: **Tappe, Wilhelm, Dr.**
**Wulfskamp 23**
**D-4600 Dortmund-Brechten(DE)**

(54) **Vorrichtung zum Einhalten einer gleichmässigen Temperatur über der Breite eines warmen Walzbandes.**

(57) Bei zwischen der Vor-und der Fertigstraße auf einem Rollgang zu transportierendem zu walzendem Walzband 11 werden die starken Abkühlungsverluste am Rand des Walzbandes nach der DE-PS 3001684 durch eine haubenartige Abdeckung des Randbereiches vermindert. Die Abkühlungsverluste werden nach der Erfindung beim Walzen von verschieden breiten Walzbändern 11 dadurch besonders klein gehalten, daß die Abdeckung der Breite des Walzbandes angepaßt wird.

Zum Anpassen wird die aus gelenkig miteinander verbundenen Teilstücken zusammengesetzte Abdeckung beim Walzen von weniger breiten Bändern stärker und von breiteren Bändern weniger stark gekrümmt, was durch Antriebe geschieht, die mit den Teilstücken verbunden sind.

Fig. 2

EP 0 287 790 A2

## Vorrichtung zum Einhalten einer gleichmäßigen Temperatur über der Breite eines warmen Walzbandes

Die Erfindung betrifft eine Vorrichtung zum Einhalten einer gleichmäßigen Temperatur über der Breite eines warmen Walzbandes auf einem Rollgang zwischen der Vor-und Fertigstraße einer Walzanlage für Stahlblech, bei der seitlich und über den Bandkanten in Richtung der Breite des Walzbandes aneinander gereihte wärmedämmende Flächen angeordnet sind, die auf die jeweilige Breite des Walzbandes einfahrbar und auf eine günstige die Abstrahlung verringernde Höhen-und Seiteneinstellung durch eine Steuer-oder Regelvorrichtung einstellbar sind.

Eine solche Vorrichtung ist aus der DE-PS 3001684 bekannt. Bei dieser Vorrichtung ist bereits eine durch Temperaturmeßelement (Detektoren 3 und 4) gesteuerte partielle Abdeckung des Kantenbereiches vorhanden, die auch an verschiedene Breiten des Walzbandes durch waagerechte Verschiebung oder durch Hochklappen der gesamten Abdeckung anpaßbar ist.

Diese Vorrichtung hat den Nachteil, daß trotz der Anpassung an verschiedene Breiten die Temperaturunterschiede über der Breite des Walzbandes noch sehr groß sind.

Es ist die Aufgabe der vorliegenden Erfindung, die Anpassung an verschiedene Breiten des Walzbandes so zu verbessern, daß die Temperaturunterschiede zwischen der Mitte des Walzbandes und dem Randbereich möglichst klein werden.

Diese Aufgabe wird durch die im kennzeichnenden Teil des Anspruches 1 genannten Maßnahmen gelöst. Weiterbildungen sind in den kennzeichnenden Teilen der Unteransprüche 2 bis 8 beschrieben.

In der Zeichnung ist die Erfindung anhand von schematischen Ausführungsbeispielen näher erläutert:

Es zeigen

Fig. 1 den Verlauf der inneren Fläche der Abdeckung bei breitem und schmalem Walzband bei gleicher Höhe der untersten Kante der Abdeckung,

Fig. 2 den Verlauf wie bei Fig. 1, jedoch mit Hohenveränderung der untersten Kante,

Fig. 3 eine Seiten-und Höhenverschiebung der gesamten Abdeckung und zusätzlicher Verstellung des Winkels zur Walzbandoberfläche des untersten Teilstückes der aus 3 Teilstücken pro Abdeckungshälfte bestehenden Abdeckung.

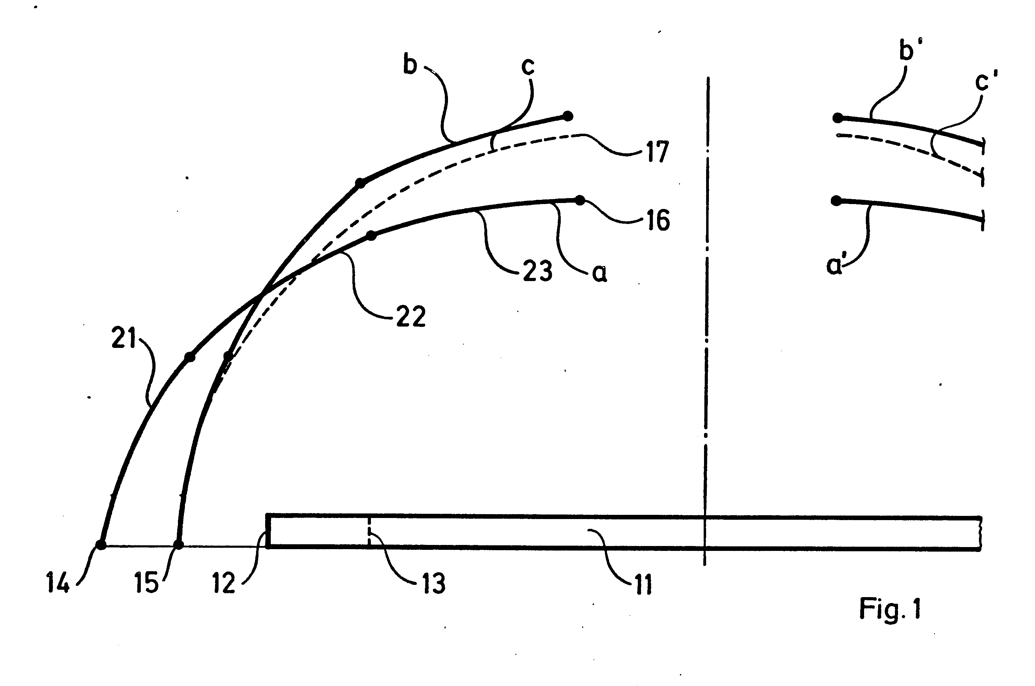

Wie die Fig. 1 zeigt, wird ein auf einem Rollgang zwischen der nicht dargestellten Vor-und Fertigstraße einer Walzanlage für Stahlblech zu transportierendes heißes Walzband 11 im Randbereich auf dem ebenfalls nicht gezeichneten Rollgang durch eine Abdeckung abgedeckt, von der nur die innerste Fläche eingezeichnet worden ist. Diese innerste Fläche gilt für das breiteste zu walzende Walzband 11, bei dem die äußere Kante die Stellung 12 inne hat.

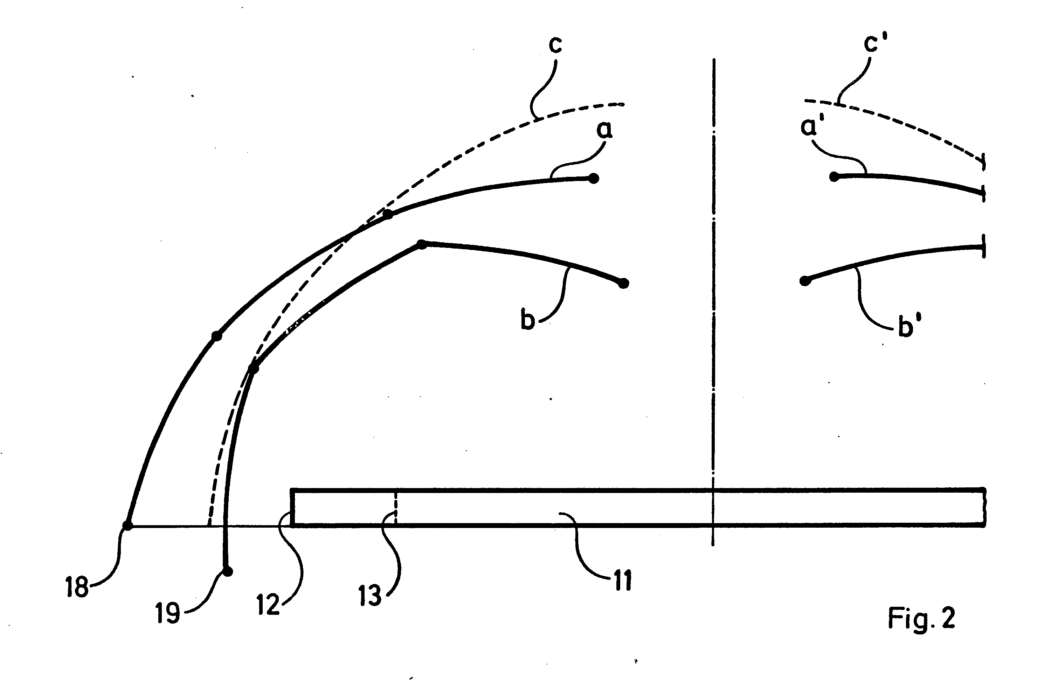

Wenn das zu walzende Walzband 11 schmaler wird und die äußere Kante die Stellung 13 inne hat, so wird jede Abdeckungshälfte ingesamt durch eine nach der DE-PS 3001684 bekannten Anpassung im untersten Punkt 14 unter Beibehaltung der Höhe dieses Punktes in die Stellung des Punktes 15 verschoben. Der obere Punkt 16 wird in die Stellung des Punktes 17 überführt. Der Verlauf dieser bekannten Anpassung ist in den Fig. 1 und 2 punktiert eingezeichnet. Bei dieser bekannten Anpassung ist die von der Abschirmung ausgehende Strahlung nicht genügend auf den Randbereich des zu walzenden Walzbandes 11 ausgerichtet.

Um diesen Nachteil zu beseitigen, wird nach der Erfindung die Abdeckung stärker gekrümmt, so daß die innerste Begrenzungsfläche der Abdeckung in der Fig. 1 entsprechend der Kurve b verläuft. Die stärkere Krümmung der Abdeckung wird dadurch ermöglicht, daß jede Halbseite der Abdeckung aus 3 oder mehr Teilstücken 21, 22, 23 besteht, die gelenkartig ineinander greifen oder die mit federnden Blechen miteinander verbunden sind. Da die Winkelveränderung der Teilstücke zueinander gering ist, reichen bereits schwach federnde Bleche als Verbindungsstücke aus.

Die Erfindung bezieht sich auf beliebige Kurvenformen des Querschnittes der Abdeckung. Eine Kurve ist für eine Randabdeckung besonders günstig, wenn der Randbereich des zu walzenden Stahlbandes 11 besonders stark von der Abdeckung umschlossen oder umhüllt wird, so daß in diesem Randbereich die Abstrahlverluste des Walzbandes 11 besonders klein gehalten werden. Um eine möglichst gleichmäßige Temperatur über dem Querschnitt des Walzbandes 11 zu erreichen, darf der mittlere Bereich des Walzbandes 11 nicht abgedeckt sein. Es ist günstig, wenn der von der Abdeckung freigelassene mittlere Bereich des Walzbandes 11 bei schmalerem zu walzenden Walzband 11 auch in der Breite etwas schmaler wird. Die Breitenänderung darf dort höchstens 1/3 von dem Wert betragen, der zwischen dem untersten Punkten 14 und 15 der Abdeckung vorhanden ist.

Eine noch bessere Anpassung an schmalere Walzbänder 11 wird entsprechend der Fig. 2 erreicht, wenn die untere Kante der Abdeckung vom Punkt 18 zum Punkt 19 in der Höhe abgesenkt wird und insbesondere das obere Teilstück der Abdeckung noch näher zur Oberfläche des Walzbandes 11 hin verschoben wird. Bei Rollgängen, bei denen die Antriebe der Rollen vom Rollgang her weit abstehen, müssen am unteren Rand der Abdeckung Aussparungen für die Antriebe eingelassen sein.

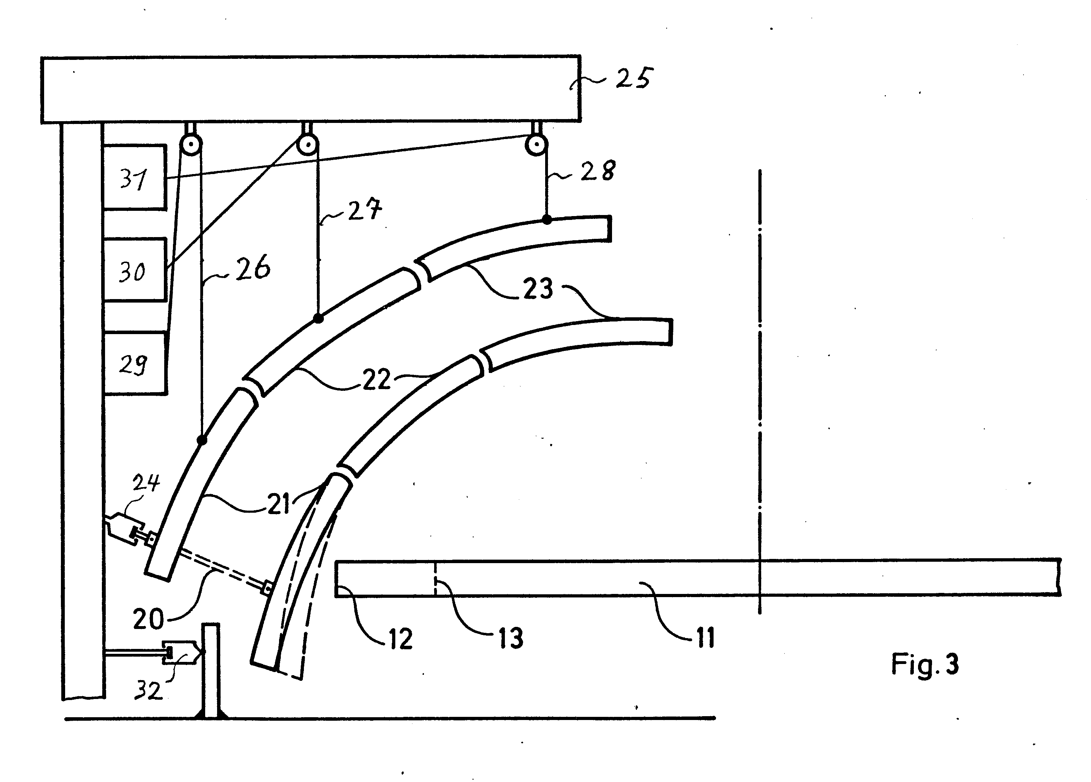

Die Anpassung nach der Fig. 3 ist nicht so optimal wie nach der Fig. 2, weil hier die gesamte Abdeckung nur parallel und in der Höhe verschoben wird und nur das unterste Teilstück zusätzlich im bestehenden Winkel zum Walzband 11 korrigiert wird. Dieses Prinzip hat den Vorteil, daß es besonders leicht herstellbar ist. In der Fig. 3 wird das unterste Teilstück durch die Stange 20 verstellt, die von dem Antrieb 24 bewegt wird.

Die gesamte Abdeckung ist an einem Gestell 25 über Kettenseile 26, 27, 28 oder Verstellstangen aufgehängt. Der Abstand der Aufhängung ist mit Hilfe eines für jedes Teilstück separaten Antriebs 29, 30, 31 veränderlich, so daß jedes Teilstück unabhängig vom anderen verstellbar ist, so daß z. B. die Kurven a und b und beliebige Zwischenkurven einstellbar sind. Das gesamte Gestell 25 kann in Richtung zum Rollgang und von diesem weg durch den hydraulischen Kolbenantrieb etwas verfahren werden, wenn das Gestell über ein nicht gezeichnetes lineares Rollenlager mit dem Fundament verbunden ist. Die Teilstücke der Abdeckung sind als Hohlkörper mit einer Füllung aus Mineralfasern oder mit inneren spiegelnden Flächen ausgebildet.

Bei gleicher Breite eines zu walzenden Walzbandes 11 aber unterschiedlicher Dicke des Walzbandes ergeben sich unterschiedliche Kurven der Abdeckung. Bei dickerem Walzband 11 als in der Fig. 2 dargestellt ist, wird insbesondere das obere Teilstück der Abdeckung etwas angehoben. Es kann dann etwas mehr Strahlung von der Kante 13 durch die freie Mitte der Abdeckung nach außen entweichen, was wegen des größeren Wärmeinhaltes des dickeren Walzbandes 11 zur Erzielung einer größeren Gleichmäßigkeit der Temperaturverteilung erwünscht ist.

Die Teilstücke der Abdeckung können auch geradlinig verlaufen, insbesondere wenn pro Hälfte der Abdeckung wesentlich mehr als 3 Teilstücke benutzt werden.

## Ansprüche

1. Vorrichtung zum Einhalten einer gleichmäßigen Temperatur über der Breite eines warmen Walzbandes (11) auf einem Rollgang zwischen der Vor-und Fertigstraße einer Walzanlage für Stahlblech, bei der seitlich und über den Bandkanten (12) in Richtung der Bandmitte jeweils als eine Abdeckungshälfte aneinander gereihte wärmedämmende Flächen (21, 22, 23) angeordnet sind und jede Abdeckungshälfte in ihrer Gesamtheit auf die jeweilige Bandbreite und auf eine günstige die Abstrahlung verringernde Höhen-und Seiteneinstellung durch eine Steuer-oder Regelvorrichtung einstellbar ist, dadurch gekennzeichnet, daß in jeder der beiden Abdeckungshälften die in Querrichtung des Walzbandes (11) mit und ohne kleinen Zwischenraum aneinander angrenzenden wärmedämmenden Flächen (21, 22, 23) in ihrer Winkellage zueinander verstellbar befestigt sind.

2. Vorrichtung nach Anspruch 1, dadurch gekennzeichnet, daß eine oder mehrere der über den Querschnitt aneinandergereihten wärmedämmenden Flächen (21, 22, 23) jeweils mit einem die Winkellage verstellbaren Antrieb verbunden ist.

3. Vorrichtung nach den Ansprüchen 1 und 2, dadurch gekennzeichnet, daß die Anzahl der wärmedämmenden Flächen (21, 22, 23) einer Abdeckungshälfte über dem Querschnitt der Breite des Walzbandes (11) 3 bis 6 beträgt.

4. Vorrichtung nach den Ansprüchen 1 bis 3, dadurch gekennzeichnet, daß die Steuer-oder Regelvorrichtung beim Walzen von geringeren Breiten des Walzbandes (11) die wärmedämmenden Flächen über einen mit jeder Fläche verbundenen separaten Antrieb in eine Stellung bringt, bei der die beiden an den Kanten des Walzbandes (11) am äußersten liegenden Flächen (21) außen dicht neben den Bandkan ten (12) liegen und gegenüber der Stellung mit der größten Breite des Walzbandes (11) einen größeren Winkel mit dem Walzband (11) einschließen und die der Mitte des Walzbandes (11) am nächsten liegenden Flächen einen kleineren Winkel mit dem Walzband einschließen oder zur Mitte des Walzbandes hin stärker fallend verlaufen, verglichen mit ihrer Stellung beim Walzen der größten Breite des Walzbandes (11).

5. Vorrichtung nach den Ansprüchen 1 bis 4, dadurch gekennzeichnet, daß in die Steuer-oder Regelvorrichtung bei gleicher Breite des Walzbandes (11) aber verschiedener Dicke die Stellungen von verschieden großen Winkeln der wärmedämmenden Flächen zur Oberfläche des Walzbandes (11) einprogrammiert sind.

6. Vorrichtung nach den Ansprüchen 1 bis 5, dadurch gekennzeichnet, daß der in der Mitte des Querschnittes der Abdeckung freigelassene Raum bei allen Stellungen der Verfahrbarkeit der wärmedämmenden Flächen in seiner Breite nur geringfügig schwankt und seine Breitenänderung kleiner als ein Drittel der Breitenänderung der Stellung der äußersten wärmedämmenden Flächen beträgt und sich verkleinert, wenn der Abstand der äußersten wärmedämmenden Flächen sich verkleinert.

7. Vorrichtung nach den Ansprüchen 1 bis 6, dadurch gekennzeichnet, daß bei der Einstellung auf geringere Breiten des Walzbandes (11) sämtliche Flächen der Abdeckung in eine tiefer liegende Stellung als bei größeren Breiten einstellbar sind.

8. Vorrichtung nach den Ansprüchen 1 bis 7, dadurch gekennzeichnet, daß bei der Einstellung auf geringere Breiten des Walzbandes (11) eine stärkere Krümmung der Abdeckung einstellbar ist.

Fig. 1

b
c
b'
c'
17
16
23
a
a'
22
21
14
15
12
13
11

0 287 790

Fig. 2

Fig. 3

0 287 790